(19) **Europäisches Patentamt / European Patent Office / Office européen des brevets**

(11) **EP 2 974 194 B1**

(12) **FASCICULE DE BREVET EUROPEEN**

(45) Date de publication et mention
de la délivrance du brevet:
**01.03.2017 Bulletin 2017/09**

(21) Numéro de dépôt: **14709641.6**

(22) Date de dépôt: **11.03.2014**

(51) Int Cl.:
*H04L 27/26* (2006.01)    *H04L 27/36* (2006.01)

(86) Numéro de dépôt international:
**PCT/EP2014/054741**

(87) Numéro de publication internationale:
**WO 2014/140040 (18.09.2014 Gazette 2014/38)**

(54) **RÉCEPTEUR FBMC UTILISANT UNE MÉTHODE DE SYNCHRONISATION DANS LE DOMAINE FRÉQUENTIEL**

FBMC EMPFÄNGER MIT EINEM SYNCHRONISATIONSVERFAHREN IM FREQUENZBEREICH

FBMC RECEIVER USING A FREQUENCY DOMAIN SYNCHRONIZATION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.03.2013 FR 1352212**

(43) Date de publication de la demande:
**20.01.2016 Bulletin 2016/03**

(73) Titulaire: **Commissariat à l'Énergie Atomique et aux Énergies Alternatives 75015 Paris (FR)**

(72) Inventeurs:
• **DORE, Jean-Baptiste**
 **F-38950 Saint Martin Le Vinoux (FR)**
• **BERG, Vincent**
 **F-38700 Corenc (FR)**

(74) Mandataire: **Brevalex
95, rue d'Amsterdam
75378 Paris Cedex 8 (FR)**

(56) Documents cités:
• **CARLOS AURELIO FARIA DA ROCHA ET AL: "Sub-channel equalizer design based on geometric interpolation for FBMC/OQAM systems", CIRCUITS AND SYSTEMS (ISCAS), 2011 IEEE INTERNATIONAL SYMPOSIUM ON, IEEE, 15 mai 2011 (2011-05-15), pages 1279-1282, XP031997867, DOI: 10.1109/ISCAS.2011.5937804 ISBN: 978-1-4244-9473-6**
• **LOUVEAUX J ET AL: "Capacity sensitivity of filter bank based MC VDSL transmission to timing errors", SIGNALS, SYSTEMS, AND ELECTRONICS, 1998. ISSSE 98. 1998 URSI INTERNATI ONAL SYMPOSIUM ON PISA, ITALY 29 SEPT.-2 OCT. 1998, NEW YORK, NY, USA,IEEE, US, 29 septembre 1998 (1998-09-29), pages 235-240, XP010316744, DOI: 10.1109/ISSSE.1998.738073 ISBN: 978-0-7803-4900-1**
• **LUQING WANG ET AL: "A simplified interpolation equalization technique for filterbank-based DMT systems", PROCEEDINGS / CCECE 2003, CANADIAN CONFERENCE ON ELECTRICAL AND COMPUTER ENGINEERING : TOWARD A CARING AND HUMANE TECHNOLOGY ; MAY 4TH TO 7TH 2003, MONTRÉAL, CANADA, IEEE, NEW YORK, NY, US, vol. 3, 4 mai 2003 (2003-05-04), pages 2063-2066, XP010653975, ISBN: 978-0-7803-7781-3**

EP 2 974 194 B1

Printed by Jouve, 75001 PARIS (FR)

**Description**

**DOMAINE TECHNIQUE**

La présente invention concerne de manière générale le domaine des systèmes de télécommunication utilisant une modulation multi-porteuse à banc de filtres, encore dénommés systèmes FBMC (*Filter Bank Multi-Carrier*).

**ÉTAT DE LA TECHNIQUE ANTÉRIEURE**

Les systèmes de télécommunication utilisant une modulation multi-porteuse sont bien connus dans l'état de la technique. Le principe d'une telle modulation consiste à diviser la bande de transmission en une pluralité de sous-canaux fréquentiels associés à des sous-porteuses et à moduler chacune de ces sous-porteuses par les données à transmettre.

La modulation multi-porteuse la plus répandue est sans aucun doute la modulation OFDM (*Orthogonal Frequency Division Multiplexing*). Celle-ci est mise en oeuvre dans les réseaux locaux sans fil WLAN, WiFi, dans l'accès internet sans fil à haut débit (WiMAX), les systèmes de radiodiffusion numérique (DVB-T, ISDB-T, DAB), les liaisons numériques asymétriques (xDSL) etc.

Dans un système de transmission OFDM, chaque bloc de symboles OFDM est précédé d'un intervalle de garde ou bien d'un préfixe cyclique, de longueur supérieure à l'étalement temporel de la réponse impulsionnelle du canal, de manière à éliminer l'interférence intersymbole. L'insertion d'un intervalle de garde ou d'un préfixe conduit toutefois à une perte d'efficacité spectrale. Enfin, l'occupation spectrale d'un signal OFDM étant sensiblement plus importante que la bande de sous-porteuses qu'il utilise en raison de l'étalement des lobes secondaires, la modulation OFDM n'est pas une solution optimale pour des applications nécessitant de forts taux de réjection hors bande, .

Plus récemment, une modulation multi-porteuse par banc de filtres ou FBMC (*Filter Bank Multi Carrier*) a été proposée comme alternative à la modulation OFDM.

Le principe de la modulation FBMC est basé sur une synthèse par banc de filtres à l'émission et une analyse par banc de filtres à la réception.

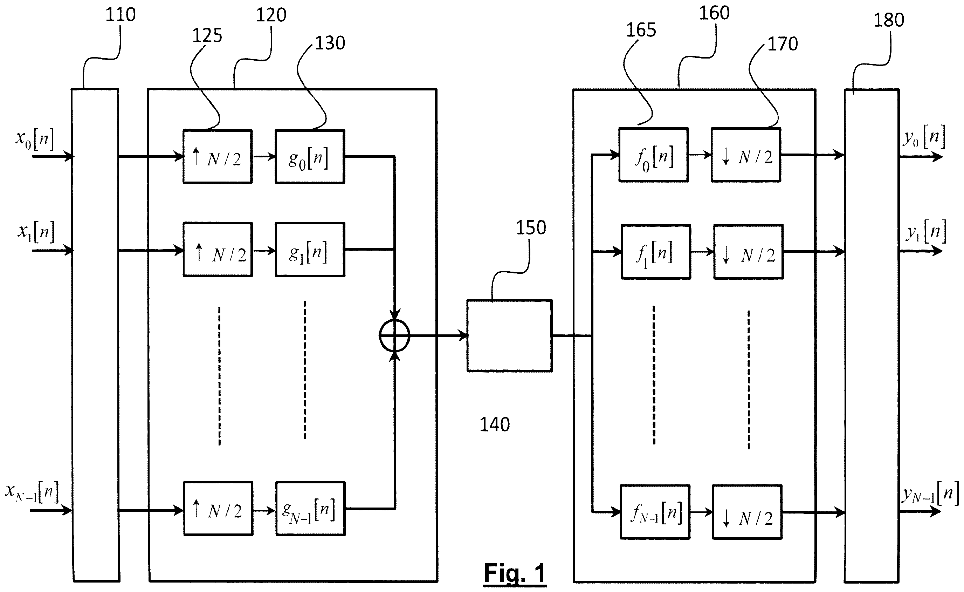

La Fig. 1 représente de manière schématique la structure d'un premier système d'émission/réception FBMC connu de l'état de la technique.

Cette structure fait appel à une configuration dite à transmultiplexeur décrite ci-après.

Au niveau de l'émetteur, les symboles de modulation à transmettre avec une cadence $f$ sont groupés par blocs de taille $N = 2M$ , $x_0 [n],...,x_{N-1} [n]$, où $n$ est l'indice temporel du bloc. Chaque bloc de N symboles est fourni en parallèle à N voies d'entrée d'un module de prétraitement 110, dit prétraitement OQAM (*Offset QAM*), détaillé plus loin.

Chaque voie de sortie du module OQAM fait l'objet, en 120, d'un sur-échantillonnage d'un facteur $N/2$.

Les différentes voies sont ensuite filtrées au moyen d'un banc de filtres polyphasés, 130, de réponses impulsionnelles respectives $g_k$, $k = 0,...,N$-1, les filtres polyphasés étant dérivés d'un filtre de base, dit filtre prototype, de réponse impulsionnelle g, comme suit :

$$ g_k[n] = g[n]\exp\left( j\frac{2\pi k}{M}(n - \frac{L-1}{2}) \right) \qquad (1) $$

où $L$ est la longueur du filtre prototype (en nombre d'échantillons). On comprendra dans l'expression (1) ci-dessus que la réponse impulsionnelle du filtre $g_k$ est donnée par les échantillons $g_k[n]$ à la fréquence d'échantillonnage $f$.

En pratique, le filtre prototype est conçu de sorte à ce que sa longueur soit égale à un multiple de $N$, à un échantillon près, autrement dit $L = KN$ ou $L = KN$ - 1 ou bien encore $L = KN$ + 1, $K$ étant un nombre entier de blocs, de valeur faible, par exemple $K = 3,4$ ou 5. Compte tenu du facteur de sur-échantillonnage, la durée des réponses impulsionnelles des filtres de synthèse est de l'ordre de $K$ blocs ou de manière équivalente de $K$ symboles FBMC.

Les signaux en sortie des filtres polyphasés sont sommés en 140 et le signal résultant est transmis sur le canal de transmission 150.

Au niveau du récepteur, le signal reçu est filtré à l'aide d'un banc de filtres d'analyse, 160, de réponses impulsionnelles $f_k$, $k = 0,..., N$-1, chaque filtre d'analyse étant adapté au filtre de synthèse correspondant, soit $f_k[n] = g_k^*[n]$.

Les sorties des filtres d'analyse sont décimées d'un facteur $N/2$ en 170 et les échantillons ainsi obtenus sont transmis sur $N$ voies parallèles à un module de post-traitement OQAM, 180, détaillé ci-après.

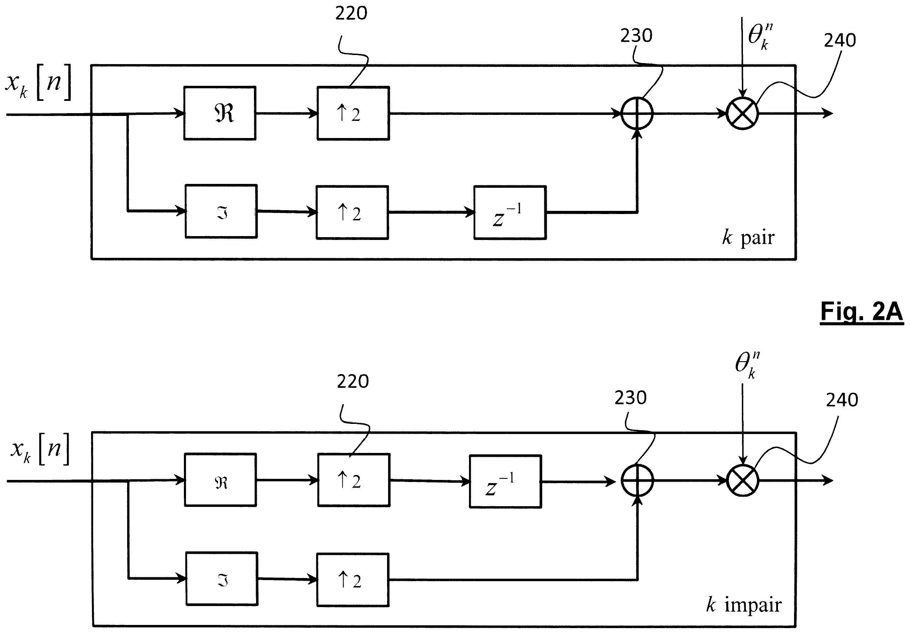

La structure du module de prétraitement OQAM a été illustrée en Fig. 2A.

Pour des raisons de simplification, on a seulement représenté sur cette figure le prétraitement effectué par ce module pour une voie $k$ de rang pair et une voie $k$ de rang impair.

Le symbole $x_k[n]$ sur la voie $k$ est décomposé en sa partie réelle et sa partie imaginaire, les parties réelle et imaginaire étant ensuite sur-échantillonnées par un facteur 2 en 220.

Lorsque $k$ est pair, la partie imaginaire est en outre retardée d'une période d'échantillonnage $(\frac{N}{2f})$ avant sommation avec la partie réelle en 230. A l'inverse, lorsque $k$ est impair, la partie réelle est retardée d'une période d'échantillonnage $(\frac{N}{2f})$ avant sommation avec la partie imaginaire en 230.

Quelle que soit la parité de $k$, les données en sortie de l'additionneur 230 sont constituées des parties réelle et imaginaire des symboles d'entrée, entrelacées temporellement. Ces données réelles sont respectivement multipliées en 240 par les éléments d'une séquence complexe, par exemple la séquence définie par $\theta_k^n = j^{n+k}$ ou bien encore $\theta_k^n = 1, j, 1, j, \ldots$ si $k$ est pair et $\theta_k^n = j, 1, j, 1 \ldots$ si $k$ est impair. On comprend ainsi, qu'après multiplication, les échantillons d'une voie $k$ sont alternativement réels et imaginaires. De même, pour un instant donné, les échantillons de différentes voies successives sont alternativement réels et imaginaires.

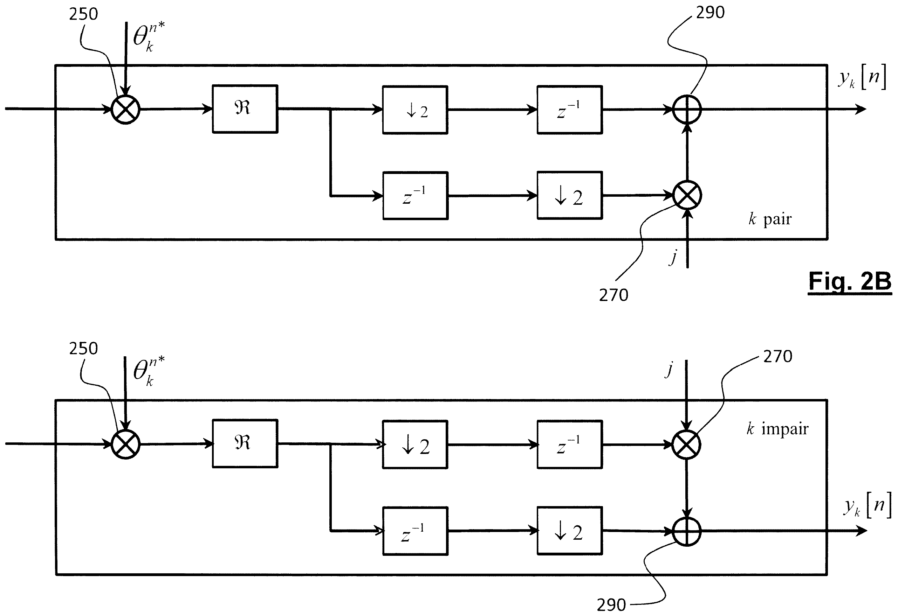

La structure du module de post-traitement OQAM a été illustrée en Fig. 2B.

Là encore, on a représenté le post-traitement pour une voie $k$ de rang pair et pour une voie $k$ de rang impair.

Le post-traitement consiste à multiplier les données successives de la voie $k$ par les éléments conjugués de la séquence $\theta_k^n$, comme représenté en 250, puis à prendre la partie réelle du résultat obtenu.

Le fait de ne conserver que la partie réelle du signal en sortie des filtres d'analyse permet de ne pas avoir à respecter une orthogonalité entre filtres (à l'inverse de l'orthogonalité entre sous-porteuses d'un signal OFDM).

Lorsque le rang $k$ de la voie est pair, les échantillons sont ensuite multiplexés et recombinés en 290 après que les échantillons impairs aient été multipliés par $j$, en 270, de manière à reconstituer les symboles QAM.

A l'inverse, lorsque le rang $k$ de la voie est impair, les échantillons sont ensuite multiplexés et recombinés en 290 après que les échantillons pairs aient été multipliés par $j$, en 270, de manière là encore à reconstituer les symboles QAM.

Le banc de filtres FBMC permet de choisir individuellement la réponse fréquentielle de chaque porteuse et donc la réponse fréquentielle sur l'ensemble de la bande du signal. En particulier, le filtre prototype peut être choisi de manière à présenter des flancs abrupts et à assurer un fort taux de réjection hors-bande.

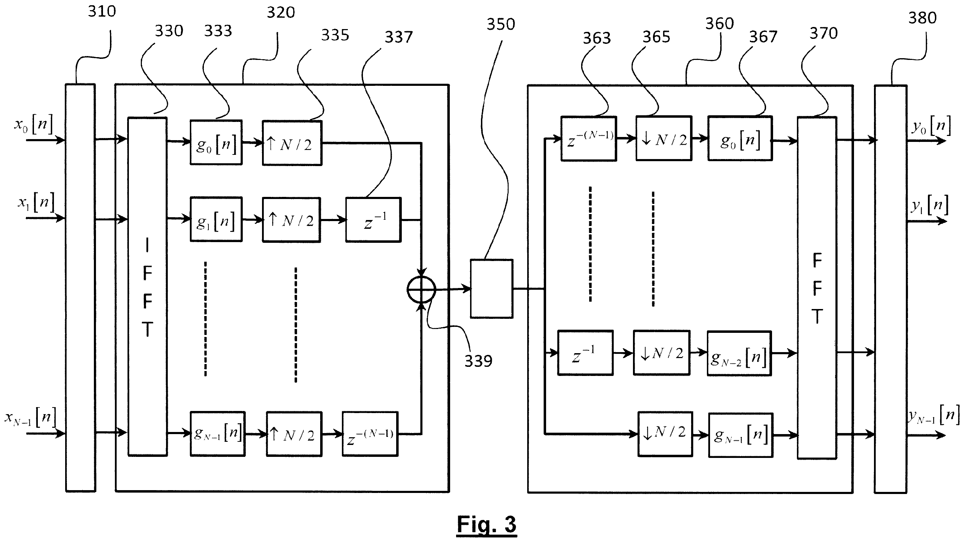

La Fig. 3 représente de manière schématique la structure d'un second système d'émission/réception FBMC connu de l'état de la technique.

Cette structure a été décrite en détail dans l'article de B. Hirosaki intitulé « An orthogonally multiplexed QAM system using the discrete Fourier transform » publié dans IEEE Trans on Comm., vol. 29 No. 7, pp. 982-989, Juillet 1981, ainsi que dans l'article de P. Siohan et al. intitulé « Analysis and design of OFDM/OQAM systems based on filterbank theory" publié dans IEEE Trans. on signal processing, vol. 50, No 5, pp. 1170-1183, Mai 2002.

Une autre structure de FBMC a été décrite dans l'article de Carlos Arlos Aurelio Faria da Rocha et al intitulé "Sub-channel equalizer design based on geometric interpolation for FBMC/OQAM systems", publié dans CIRCUITS AND SYSTEMS (ISCAS), 2011 IEEE INTERNATIONAL SYMPOSIUM, 15 mai 2011 (2011-05-15), pages 1279-1282.

Le système d'émission de la Fig. 3 comprend, d'une part un émetteur constitué d'un module de prétraitement OQAM 310, identique au module 110 de la Fig. 1, et un banc de filtres de synthèse, 320, et d'autre part, un récepteur constitué d'un banc de filtres d'analyse, 360, et d'un module de post-traitement 380 identique au module de post-traitement 180 de la Fig. 1.

Le banc de filtres de synthèse, 320, est constitué d'un module IFFT (transformée de Fourier rapide inverse), 330, d'une pluralité N de filtres polyphasés 333 dont les réponses impulsionnelles sont données par l'expression (1), d'une pluralité de sur-échantillonneurs 335 en sortie des différents filtres polyphasés, une pluralité de retards, 337, arrangés en parallèle et variant de 0 à ($N$-1) périodes d'échantillonnage, les sorties des filtres polyphasés, sur-échantillonnées et retardées étant sommées par l'additionneur 339 avant transmission sur le canal 350.

Du côté du récepteur, le banc de filtres d'analyse, 360, comprend une pluralité de retards, 363, arrangés en parallèle et variant de 0 à ($N$-1) périodes d'échantillonnage, dans l'ordre inverse des retards 337. Les flux d'échantillons issus des différents retards sont ensuite décimés d'un facteur $N/2$ par les décimateurs 365 puis filtrés par les filtres d'analyse 367. Les filtres d'analyse ont une réponse impulsionnelle conjuguée et inversée temporellement par rapport au filtre de synthèse correspondant. Etant donné que le filtre prototype est à valeurs réelles et symétrique par inversion temporelle, on peut montrer qu'un filtre d'analyse a la même réponse impulsionnelle que le filtre de synthèse correspondant. Les symboles en sortie des filtres de synthèse font ensuite l'objet d'une FFT (transformée de Fourier rapide) en 370, les différentes composantes fréquentielles de la FFT étant ensuite fournies au module de post-traitement 380.

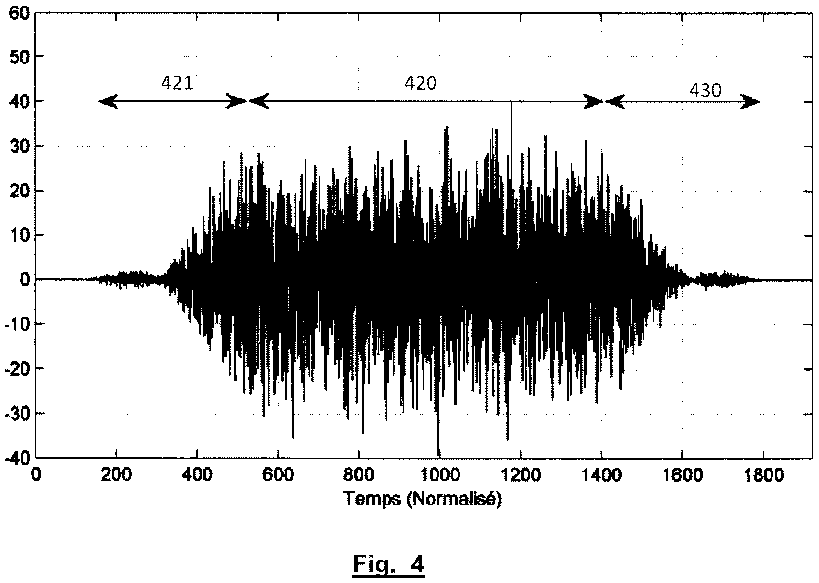

La Fig. 4 illustre la forme d'onde du signal en sortie de l'émetteur de la Fig. 3, lorsqu'un paquet de symboles FBMC est transmis sur le canal de transmission. Par symbole FBMC on entend le signal généré en sortie de l'émetteur, correspondant à un bloc de symboles $x_0[n],...,x_{N-1}[n]$.

On remarque sur la figure que le signal en sortie de l'émetteur comprend une première partie 421, correspondant au temps de montée du filtre prototype, s'étendant sur $(K\text{-}1)/2$ symboles FBMC, une seconde partie 420 correspondant au paquet transmis, et une troisième partie 430, correspondant au temps de descente du filtre prototype, s'étendant également sur $(K\text{-}1)/2$ symboles FBMC.

Une des difficultés des systèmes utilisant la modulation FBMC réside dans la synchronisation du récepteur.

Cette synchronisation comprend deux étapes.

Tout d'abord le récepteur doit synchroniser ses instants d'échantillonnage sur ceux de l'émetteur. Ensuite, il doit se caler en temps et en fréquence sur le début de chaque paquet FBMC. On utilise généralement pour ce faire un préambule situé à un intervalle temporel prédéterminé du début du paquet de données utiles, en prévoyant un silence pendant cet intervalle, la longueur de cet intervalle étant choisie supérieure au temps de descente du filtre prototype de manière à ce que le préambule n'interfère pas avec les données utiles.

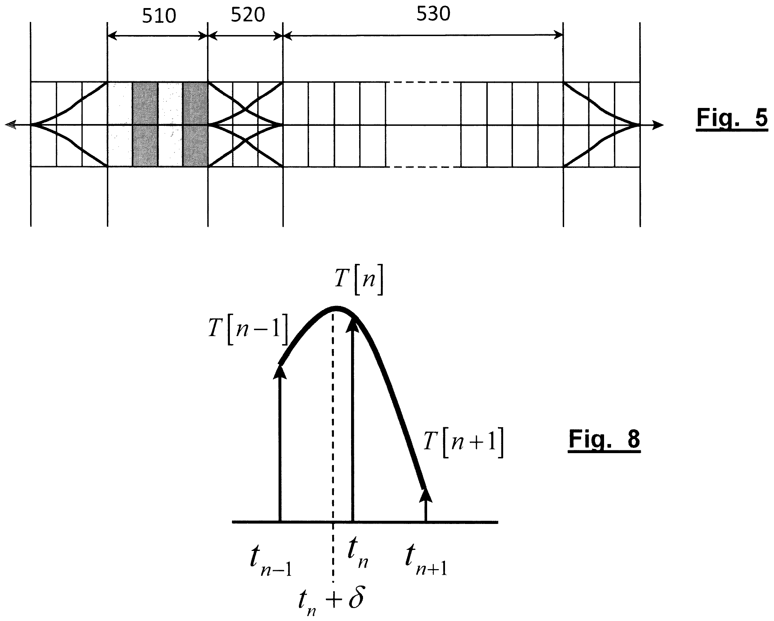

La Fig. 5 représente schématiquement la forme d'onde d'un signal en sortie de l'émetteur de la Fig. 3 lorsqu'un tel préambule de synchronisation est prévu. On distingue sur cette figure, le préambule 510, la période de silence 520 et le paquet de données utiles 530.

La plupart des méthodes de synchronisation proposées pour les récepteurs FBMC opèrent dans le domaine temporel. Ainsi, il est possible de prévoir dans le préambule une séquence d'apprentissage se répétant dans le temps avec une périodicité prédéterminée et d'effectuer une autocorrélation du signal reçu de manière à détecter à la fois les instants d'échantillonnage et la position temporelle du préambule. Connaissant le décalage temporel entre le préambule et le paquet, le début de la FFT est alors calé sur le début du paquet.

Cette méthode de synchronisation présente toutefois plusieurs inconvénients.

Tout d'abord la détermination du pic de la fonction d'autocorrélation n'est pas très précise, notamment en présence de bruit sur le canal de transmission.

Ensuite si cette méthode de synchronisation n'est pas adaptée lorsque le récepteur reçoit le signal de plusieurs utilisateurs, comme c'est notamment le cas sur la voie montante d'un système cellulaire (station de base recevant plusieurs communications montantes simultanées), les paquets provenant des différents utilisateurs sont généralement décalés dans le temps. Il est alors nécessaire de déterminer le début de chaque paquet et de prévoir autant de bancs de filtres d'analyse que d'utilisateurs, solution complexe qui ne peut être implémentée en pratique.

Alternativement, la synchronisation du récepteur FBMC peut opérer dans le domaine fréquentiel. Dans ce cas, le passage dans le domaine fréquentiel est effectué en continu, au fil de l'eau et le début de la FFT intervient à un moment quelconque. La synchronisation est alors effectuée après la FFT, dans le domaine fréquentiel.

Une méthode de synchronisation de récepteur FBMC opérant dans le domaine fréquentiel a été proposée dans l'article de T.H. Stitz et al. intitulé « Practical issues in frequency domain synchronization for filter bank based multicarrier transmission », publié dans Proc. of. ISCCSP, 2008, pp. 411-416, 12-14 Mars 2008. Cette méthode proposée permet en outre d'effectuer une égalisation dans le domaine fréquentiel, sous-porteuse par sous-porteuse.

Le récepteur fait appel à une séquence d'apprentissage (séquence de symboles pilotes) pour chaque sous-porteuse et à un corrélateur par sous-porteuse. La synchronisation se fait au moyen d'une compensation de phase réalisée pour chaque égaliseur, sous-porteuse par sous-porteuse, et est donc relativement complexe.

Le but de la présente invention est de proposer un récepteur FBMC utilisant une méthode de synchronisation opérant dans le domaine fréquentiel, particulièrement simple à mettre en oeuvre, le cas échéant après qu'une synchronisation grossière ait été effectuée dans le domaine temporel.

Un but subsidiaire de la présente invention est de permettre une égalisation du signal reçu par le récepteur, qui soit particulièrement simple à implémenter.

## EXPOSÉ DE L'INVENTION

La présente invention est définie par un récepteur de signal multi-porteuse synthétisé par banc de filtres de synthèse, ledit récepteur comprenant une pluralité de filtres d'analyse pour analyser ledit signal, après échantillonnage en des instants d'échantillonnage, les sorties des filtres étant reliées à un module de transformée de Fourier fournissant, pour une pluralité de sous-porteuses, des échantillons dans le domaine fréquentiel. Le récepteur de signal multi-porteuse comprend :

- un module d'estimation d'erreur sur les instants d'échantillonnage, recevant lesdits échantillons pour au moins un sous-ensemble de ladite pluralité de sous-porteuses et pour une pluralité desdits instants d'échantillonnage, et fournissant une estimation de ladite erreur;

et, pour chaque sous-porteuse de ladite pluralité de sous porteuses :

- un filtre interpolateur, recevant une estimation de ladite erreur et interpolant des échantillons d'une sous-porteuse pour fournir un échantillon interpolé en un instant d'échantillonnage corrigé de ladite erreur.

Avantageusement, le module d'estimation d'erreur sur les instants d'échantillonnage effectue pour chaque porteuse dudit sous-ensemble de porteuses une estimation de la réponse impulsionnelle à la fréquence de cette sous-porteuse d'un ensemble banc de filtres de synthèse, canal de transmission, banc de filtres d'analyse à partir de symboles pilotes, et calcule une métrique à partir des réponses impulsionnelles ainsi estimées.

La métrique est de préférence une somme quadratique desdites réponses impulsionnelles pour les sous-porteuses dudit sous-ensemble, ladite métrique étant calculée en trois instants d'échantillonnage consécutifs pour donner trois valeurs de métrique, le module d'estimation d'erreur déterminant l'instant auquel une fonction parabolique, passant par les trois valeurs de métriques en ces trois instants, atteint son maximum et en déduisant l'erreur sur les instants d'échantillonnage.

Alternativement, la métrique peut être une corrélation desdites réponses impulsionnelles pour les sous-porteuses dudit sous-ensemble, le module d'estimation d'erreur, le module d'estimation d'erreur déterminant l'erreur sur les instants d'échantillonnage à partir de la phase du résultat de corrélation.

Avantageusement, le sous-ensemble des sous-porteuses pour le calcul de la métrique peut être constitué des sous-porteuses dont le module de la réponse impulsionnelle est supérieur à un seuil prédéterminé.

Selon un premier exemple de réalisation, le filtre interpolateur utilise une fonction d'interpolation de type spline, ladite fonction étant identique pour la pluralité des sous-porteuses.

Selon un second exemple de réalisation, le filtre interpolateur utilise un polynôme d'interpolation de Lagrange, les coefficients dudit polynôme étant identiques pour la pluralité des sous-porteuses.

Selon un mode avantageux de réalisation, le récepteur comprend en outre un module de post-traitement OQAM, un symbole OQAM étant représenté par deux échantillons consécutifs d'une même sous-porteuse, le filtre interpolateur comprenant un premier module interpolant les parties réelles d'une pluralité d'échantillons successifs et un second module interpolant les parties imaginaires de ladite pluralité d'échantillons successifs.

Pour chaque sous-porteuse, le filtre interpolateur est avantageusement suivi d'un module de déphasage effectuant une compensation de phase des échantillons interpolés au moyen d'une multiplication par un terme de phase $\exp(-j\phi(k))$ où $\phi(k)$ est proportionnelle à la fréquence de la sous-porteuse ($k$) et à l'erreur sur les instants d'échantillonnage.

En outre, pour chaque sous-porteuse, le module de déphasage peut être suivi d'un égaliseur dans le domaine fréquentiel.

Avantageusement, ledit signal est constitué de trames, chaque trame comprenant un préambule suivi d'un paquet de données utiles, le préambule comprenant une pluralité de symboles pilotes sur des sous-porteuses, dites sous-porteuses actives, de ladite pluralité de sous-porteuses, chaque symbole pilote étant entouré d'un anneau de garde en temps et en fréquence, le récepteur déterminant l'énergie reçue sur lesdites sous-porteuses actives et ouvrant une fenêtre temporelle lorsque cette énergie franchit un seuil prédéterminé, le récepteur déterminant ensuite le début dudit paquet lorsque l'énergie du signal reçu atteint un maximum.

Avantageusement également, ledit signal est constitué de trames, chaque trame comprenant un préambule suivi d'un paquet de données utiles, le préambule comprenant pour au moins une porteuse, une séquence de synchronisation, le récepteur comprenant un module de synchronisation dans le domaine temporel, ce module recevant les échantillons en entrée du module de transformée de Fourier et effectuant une corrélation avec ladite séquence de synchronisation pour obtenir un pic de corrélation, et effectuant une synchronisation du début de la transformée de Fourier à partir de la position du pic de corrélation ainsi obtenu.

## BRÈVE DESCRIPTION DES DESSINS

D'autres caractéristiques et avantages de l'invention apparaîtront à la lecture de modes de réalisation préférentiels de l'invention, en référence aux figures jointes parmi lesquelles :

La Fig. 1 représente la structure d'un premier système d'émission/réception FBMC connu de l'état de la technique ;
La Fig. 2A représente schématiquement le module de prétraitement du système de la Fig. 1 ;
La Fig. 2B représente schématiquement le module de post-traitement du système de la Fig. 1 ;
La Fig. 3 représente la structure d'un second système d'émission/réception FBMC connu de l'état de la technique ;
La Fig. 4 illustre la forme d'onde du signal en sortie de l'émetteur de la Fig. 3 ;
La Fig. 5 illustre la forme d'onde du signal en sortie de l'émetteur de la Fig. 3 lorsqu'un préambule de synchronisation est prévu ;
La Fig. 6 représente schématiquement un récepteur FBMC utilisant une méthode de synchronisation dans le domaine fréquentiel, selon un premier mode de réalisation de l'invention ;
Les Figs. 7A et 7B illustrent respectivement la situation d'un récepteur synchronisé et d'un récepteur présentant une erreur de synchronisation ;

La Fig. 8 représente une métrique utilisée dans un module de la Fig. 6 pour déterminer une erreur sur les instants d'échantillonnage ;

La Fig. 9 représente une trame de signal reçu par le récepteur FBMC ;

La Fig. 10 représente schématiquement un récepteur FBMC utilisant une méthode de synchronisation dans les domaines temporel et fréquentiel, selon un second mode de réalisation de l'invention.

## EXPOSÉ DÉTAILLÉ DE MODES DE RÉALISATION PARTICULIERS

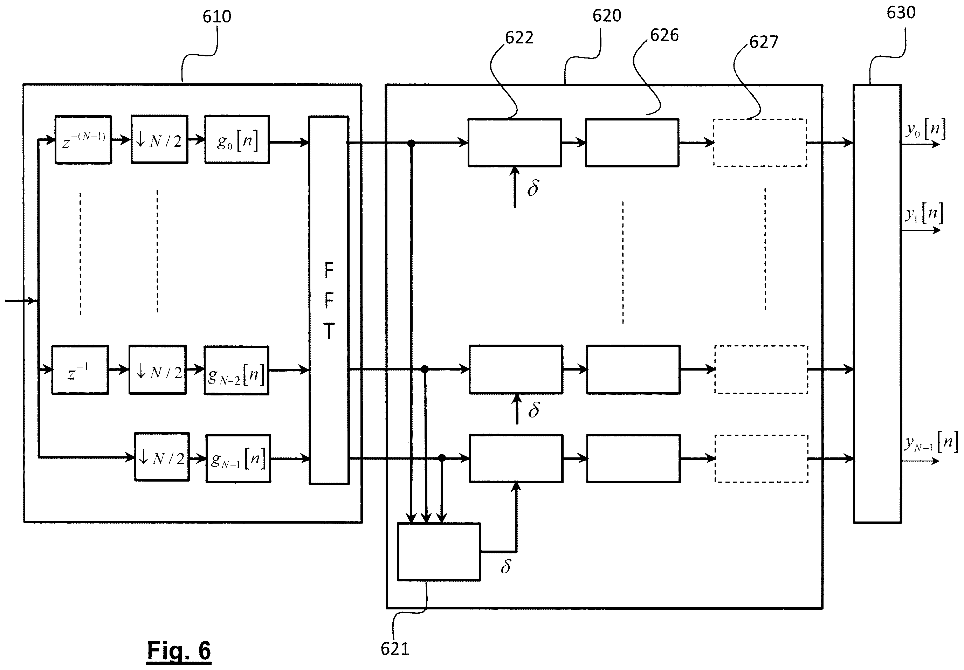

La Fig. 6 représente un récepteur FBMC selon un mode de réalisation de l'invention. Ce récepteur comprend un banc de filtres d'analyse 610 identique au banc de filtres 360 de la Fig. 3, un module de synchronisation 620, ainsi qu'un module de post-traitement 630, identique au module de post-traitement 380 de la Fig. 3.

Le module de FFT effectue la FFT au fil de l'eau, c'est-à-dire sans calage préalable au début d'un paquet de données.

Le module de synchronisation reçoit les échantillons issus des canaux fréquentiels (*frequency bins*) du module de FFT, chaque canal étant associé à une sous-porteuse. Il opère par conséquent dans le domaine fréquentiel.

Pour un canal fréquentiel donné, la séquence des échantillons représente un signal de sous-porteuse, un symbole QAM transmis par l'émetteur sur la fréquence de la sous-porteuse correspondant à deux échantillons successifs en quadrature.

L'idée à la base de l'invention est d'effectuer une interpolation entre symboles successifs (en sortie de FFT) après avoir estimé l'erreur sur les instants d'échantillonnage.

Pour ce faire, le module de synchronisation 620 comprend un estimateur d'erreur sur les instants d'échantillonnage 621, et, pour chaque sous-porteuse *k*, un filtre interpolateur 622 recevant l'erreur ainsi estimée, suivi d'un module de déphasage 626. Ce module de déphasage peut être optionnellement suivi d'un égaliseur 627.

On considère dans la suite une sous-porteuse *k* donnée et l'on note $R_g^k$ la convolution entre le filtre de synthèse $g_k$ et le filtre d'analyse correspondant.

Lorsque l'échantillonnage à la réception ne coïncide pas avec les instants où les échantillons sont effectivement reçus, il en résulte une erreur sur les valeurs des échantillons successifs.

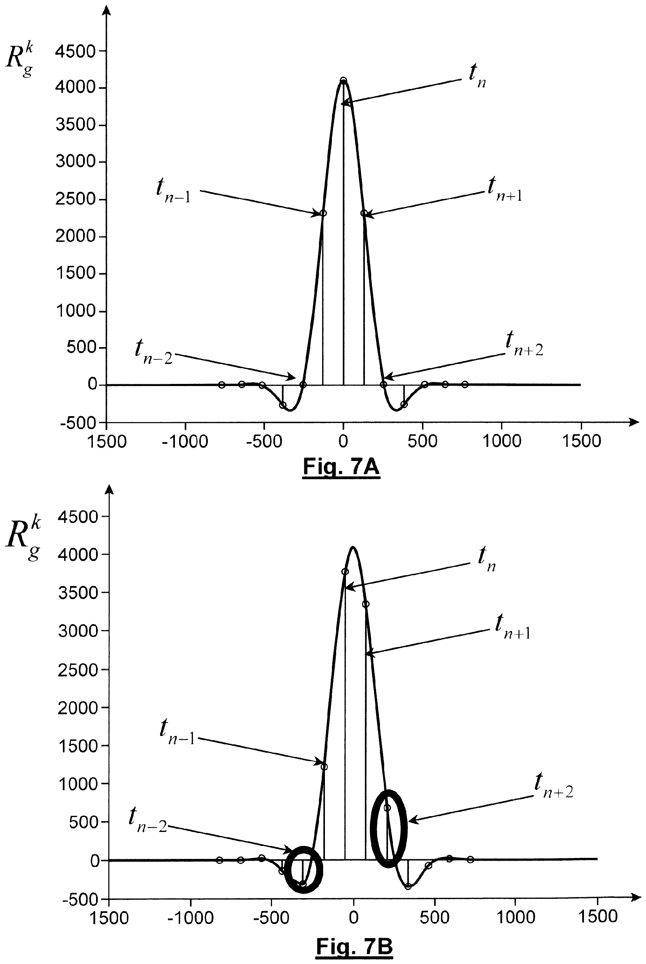

La Fig. 7A illustre la situation où les instants d'échantillonnage coïncident avec ceux où les échantillons sont reçus. Plus précisément, la Fig. 7A représente la fonction $R_g^k$ pour un échantillon émis. L'instant d'échantillonnage $t_n$ coïncide ici avec le maximum de la fonction $R_g^k$. On remarque que les valeurs de $R_g^k$ ne sont pas nulles aux instants $t_{n-1}$ et $t_{n+1}$. On notera toutefois que ces valeurs ne créent pas d'interférence, étant donné que les échantillons reçus sur la même voie aux instants $t_{n-1}$ et $t_{n+1}$ sont purement imaginaires si l'échantillon reçu au temps $t_n$ est réel, et inversement. En outre, les valeurs de $R_g^k$ étant nulles aux instants $t_{n-2}$ et $t_{n+2}$, aucune interférence n'est générée en ces instants également.

La Fig. 7B illustre la situation où le récepteur commet une erreur $\tau$ sur l'instant d'échantillonnage $t_n$.

On remarque que l'instant d'échantillonnage $t_n$ ne correspond plus au maximum de la fonction $R_g^k$ et que des interférences sont générées aux instants $t_{n-2}$ et $t_{n+2}$.

Le filtre interpolateur effectue une interpolation entre échantillons successifs. Plus précisément, le filtre interpolateur comprend un premier module d'interpolation interpolant les échantillons sur l'axe réel et un second module d'interpolation sur l'axe en quadrature. La réponse $R_g^k$ étant sensiblement identique pour deux échantillons successifs, on peut considérer que la fonction d'interpolation est la même sur ces deux axes.

L'interpolation peut être réalisée au moyen d'une fonction d'interpolation $\Lambda^k(t)$, par exemple une fonction spline ou bien une fonction polynomiale de Lagrange, de manière connue en soi. La fonction d'interpolation est déterminée de manière à passer par les valeurs de la pluralité des échantillons.

Ainsi si l'on note $y_{n-v}^k, ..., y_{n-1}^k, y_n^k, y_{n+1}^k, ..., y_{n+v}^k$ une série de $2v+1$ échantillons successifs en entrée du filtre interpolateur, avec $v \geq 1$, ce filtre peut effectuer une interpolation entre les $2v+1$ échantillons à l'aide du polynôme de Lagrange :

$$\Lambda^k(t) = \sum_{i=-v}^{+v} y_{n+i}^k \prod_{j=-v}^{+v} \frac{t - t_{n+j}}{t_{n+i} - t_{n+j}} \qquad (2)$$

où $t_n$ est l'instant associé à l'échantillon $y_n^k$ .

A partir de l'erreur $\tau$ sur les instants d'échantillonnage, le filtre interpolateur détermine pour chaque échantillon $y_n^k$ la valeur corrigée :

$$\tilde{y}_n^k = \Lambda^k \left( t_n + \tau \right) \qquad (3)$$

On comprendra que la valeur $\tilde{y}_n^k$ sera soit réelle soit imaginaire, selon la parité de *n*.

Il est important de noter que les fonctions d'interpolation $\Lambda^k$ sont identiques pour toutes les sous-porteuses, autrement dit :

$$\Lambda^k = \Lambda , \ k = 0,...,N-1 \qquad (4)$$

Ainsi, le calcul de la fonction d'interpolation pourra n'être réalisé qu'une fois pour l'ensemble des N sous porteuses. Alternativement, le calcul pourra être effectué sur un ensemble de porteuses et les coefficients des polynômes d'interpolation pourront être moyennés sur cet ensemble.

En tout état de cause, on obtient une série d'échantillons interpolés $\tilde{y}_n^k$ en sortie du multiplexeur 626.

Le ré-échantillonnage par interpolation tel que décrit ci-dessus permet de limiter l'interférence inter-symbole. La réjection de l'interférence inter-symbole sera fonction de la qualité du filtre interpolateur.

En revanche, ce ré-échantillonnage ne permet pas de corriger l'erreur de phase due au défaut d'alignement temporel du banc filtres d'analyse avec le banc de filtres de synthèse, autrement dit de compenser l'erreur de phase due au défaut d'alignement temporel $\tau$ de la réponse impulsionnelle d'un filtre d'analyse par rapport à celle du filtre de synthèse correspondant. Ainsi, pour une sous-porteuse donnée *k*, le résultat de la convolution entre le filtre de synthèse et le filtre d'analyse au temps $t_n$, compte tenu de (1) s'exprime alors, en sortie de la FFT, par :

$$R_g^k [n] = g_k [n] g_k^* [n - \delta] = g [n] g^* [n - \delta] \exp \left( j \frac{2\pi k \delta}{M} \right) \qquad (5)$$

où l'on a noté $\delta = \tau / T$ l'erreur sur l'instant d'échantillonnage exprimée en nombre (décimal) de la période d'échantillonnage T.

On remarque que, lorsque $\delta$ est un multiple entier de *M,* le terme de phase à la droite de l'expression (5) disparaît. Dans ce cas, les instants d'échantillonnage au niveau du récepteur correspondent aux instants auxquels les échantillons transmis par l'émetteur sont reçus.

En revanche si l'instant d'échantillonnage n'est pas correct, une rampe de phase $\phi(k) = \dfrac{2\pi k \delta}{M}$ apparait sur les différentes sous-porteuses, en sortie de la FFT.

Pour une sous-porteuse *k* donnée, les échantillons interpolés $\tilde{y}_n^k$ en sortie du multiplexeur 626 font l'objet d'un déphasage dans le module de déphasage 626. Plus précisément, le module de déphasage effectue une compensation de phase au moyen d'une multiplication par le terme de phase $\exp(-j\phi(k))$.

Optionnellement, le module de déphasage peut être suivi d'un égaliseur, 627, dans le domaine fréquentiel. Cet égaliseur peut opérer sur deux symboles successifs (c'est-à-dire sur des échantillons successifs ayant des rangs de même parité) ou sur une pluralité *P* d'échantillons successifs (filtre linéaire à *P* prises). L'égaliseur peut mettre en oeuvre une méthode d'égalisation de type ZF (*Zero Forcing*) ou MMSE (*Minimum Mean Square Error*) de manière connue en soi.

L'estimateur d'erreur sur les instants d'échantillonnage, 621, effectue une estimation de la réponse impulsionnelle de l'ensemble banc de filtres de synthèse, canal, banc de filtres d'analyse à la fréquence de chaque sous-porteuse *k*, comme détaillé plus loin.

Si l'étalement du canal est faible devant la durée d'un symbole FBMC, la réponse impulsionnelle précitée pour la sous-porteuse *k* peut s'exprimer sous la forme suivante :

$$h_k[n] = \alpha_k R_g[n] \tag{6}$$

où $R_g[n] = g[n]g[n]^*$ est la fonction d'autocorrélation du filtre prototype et $\alpha_k$ est le coefficient du canal à la fréquence de la sous-porteuse $k$.

L'estimateur d'erreur sur les instants d'échantillonnage, 621, effectue le calcul d'une métrique obtenue par une sommation quadratique des réponses impulsionnelles relatives aux différentes sous-porteuses :

$$T[n] = \sum_k \left| h_k[n] \right|^2 = \left| R_g[n] \right|^2 \sum_k \left| \alpha_k \right|^2 \tag{7}$$

Cette sommation peut porter sur l'ensemble des sous-porteuses ou bien être limitée à celles ne subissant pas un évanouissement (*fading*) important. Etant donné que la fonction d'autocorrélation intervient de manière identique pour toutes les sous-porteuses, cela revient à déterminer les sous-porteuses $k$, telles que $|h_k[n]|^2 > \lambda$ où $\lambda$ est un seuil prédéterminé.

On peut montrer que la métrique $T[n]$ est maximale et atteint la valeur donnée par l'expression (7) lorsque l'erreur sur l'instant d'échantillonnage est nulle.

L'estimateur d'erreur sur les instants d'échantillonnage, 621, calcule la métrique $T[n]$ définie par (7) pour trois échantillons consécutifs, soit $T[n-1]$, $T[n]$ et $T[n+1]$ et détermine l'instant auquel cette métrique atteint son maximum.

Pour ce faire, on considère la parabole passant par les points $(t_{n-1}, T[n-1]), (t_n, T[n]), (t_{n+1}, T[n+1])$ comme illustré en Fig. 8. Le maximum de la parabole est atteint à l'instant $t_n + \delta.T$ tel que :

$$\delta = \frac{T[n+1] - T[n-1]}{T[n+1] + T[n-1] - 2T[n]} \tag{8}$$

où $\delta$ représente l'erreur sur les instants d'échantillonnage, sous forme d'un nombre fractionnaire de la période d'échantillonnage.

Alternativement, l'erreur $\delta$ sur les instants d'échantillonnage peut être déterminée par l'estimateur 621 à partir de la corrélation entre réponses impulsionnelles relatives à différentes sous-porteuses. Soient $h_k[n]$ et $h_{k+m}[n]$ les réponses impulsionnelles de l'ensemble filtre de synthèse, canal et filtre d'analyse, pour les sous-porteuses $k$ et $k+m$, la corrélation entre les réponses impulsionnelles s'exprime comme :

$$h_k[n] h_{k+m}^*[n] = \alpha_k \alpha_{k+m}^* \left| R_g[n] \right|^2 \exp\left( -2\pi j \frac{m\delta}{M} \right) \tag{9}$$

L'estimateur d'erreur 621 calcule une métrique de corrélation en sommant les termes de corrélation sur une pluralité de sous-porteuses, soit :

$$T'[n] = \sum_k h_k[n] h_{k+m}^*[n] = \left| R_g[n] \right|^2 \exp\left( -2\pi j \frac{m\delta}{M} \right) \sum_k \alpha_k \alpha_{k+m}^* \tag{10}$$

Lorsque le canal de transmission n'est pas ou est peu sélectif en fréquence, c'est-à-dire lorsque $\alpha_k \approx \alpha_{k+m}$, l'erreur $\delta$ peut être déterminée à partir de la phase de $T'[n]$.

Selon une variante, si le récepteur procède à une estimation de canal pour les différentes sous-porteuses, les coefficients $\alpha_k$ sont connus. L'erreur $\delta$ peut être déterminée à partir de $T'[n]$ et du terme $\sum_k \alpha_k \alpha_{k+m}^*$ .

Dans tous les cas l'estimateur d'erreur, 621, doit être capable d'estimer la réponse impulsionnelle $h_k[n]$. Cette réponse impulsionnelle peut être obtenue à partir de symboles pilotes placés par exemple dans le préambule du paquet de données utiles.

En pratique, la réponse impulsionnelle $h_k[n]$ présente un étalement en temps et en fréquence. Le filtre prototype est choisi de manière à ce que cet étalement soit relativement faible.

Par exemple, on pourra choisir comme filtre prototype, le filtre défini par les coefficients :

$$h[n] = 1 + \sum_{k=1}^{K-1} (-1)^k H(k/L) \cos(2\pi kn/L) \text{ pour } 1 \leq n \leq L-1$$

$$h[0] = 0 \qquad\qquad (11)$$

avec $K = 4$ ; $H(1/L) = 0.972$ ; $H(2/L) = 1/\sqrt{2}$ ; $H(3/L) = 0.235$.

Dans ce cas, l'interférence générée par un symbole au temps $t_n$ sur la sous-porteuse $k$ peut être visualisée au moyen du tableau :

|  | $t_{n-2}$ | $t_{n-1}$ | $t_n$ | $t_{n+1}$ | $t_{n+2}$ |
|---|---|---|---|---|---|
| $k$-1 | -0.1250 | -0.2063j | 0.24 | 0.2063j | -0.1250 |
| $k$ | 0 | 0.5638 | 1 | 0.5638 | 0 |
| $k$+1 | -0.1250 | 0.2063j | 0.24 | -0.2063j | -0.1250 |

On comprend que l'interférence générée par le symbole en question s'étend seulement sur deux périodes d'échantillonnage avant et après ledit symbole et sur une sous-porteuse de part et d'autre de la sous-porteuse $k$.

Afin d'obtenir une estimation non biaisée de la réponse impulsionnelle $h_k[n]$, on prévoit avantageusement un anneau de garde autour de chaque symbole pilote, en temps et en fréquence.

Dans le cas de l'étalement indiqué ci-dessus, l'anneau de garde aura une étendue temporelle de deux périodes d'échantillonnage avant et après le symbole pilote et une étendue fréquentielle d'une sous-porteuse de part et d'autre de ce dernier.

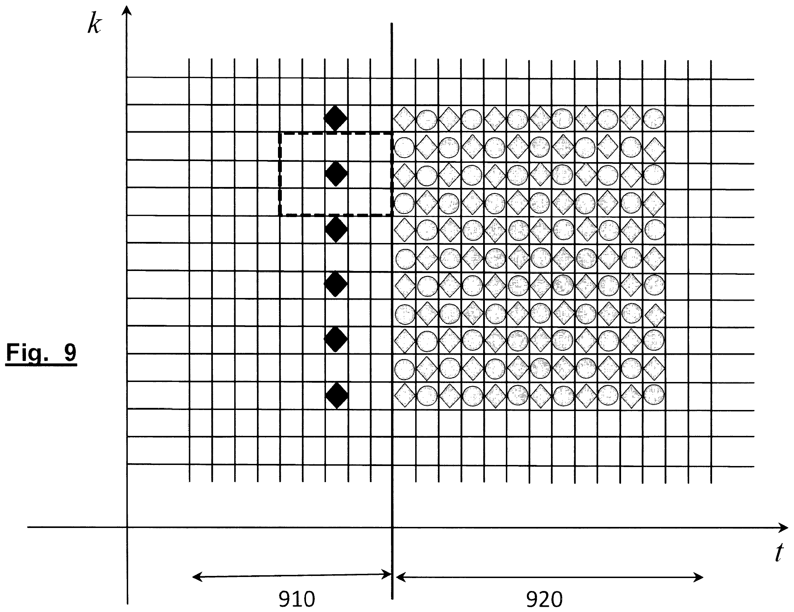

La Fig. 9 représente schématiquement une trame du signal reçu par le récepteur. Cette trame comprend un préambule, 910, suivi d'un paquet de données utiles, 920. Le préambule comprend des symboles pilotes indiqués par des losanges noirs. Les données utiles sont indiquées par des losanges grisés (pour les valeurs imaginaires) et des cercles grisés (pour les valeurs réelles).

Alternativement les symboles pilotes peuvent être incorporés au sein du paquet de données utiles.

Nous avons vu précédemment que la synchronisation du récepteur comportait, d'une part, le calage de l'échantillonnage et d'autre part la détermination du début de chaque paquet de données utiles.

Si l'on utilise le format de trame de la Fig.9, c'est-à-dire un préambule comportant des symboles pilotes sur certaines sous-porteuses seulement, dites sous-porteuses actives, le début du paquet est détecté comme suit :

- on calcule l'énergie sur l'ensemble des sous-porteuses actives;
- lorsque cette énergie est supérieure à une valeur de seuil prédéterminée, on ouvre une fenêtre temporelle de $Q$ échantillons à compter de l'instant où le seuil est franchi ;
- on recherche ensuite au sein de cette fenêtre l'instant où le maximum d'énergie du signal reçu est atteint, correspondant sensiblement au début du paquet utile. Soit $n_{max}$ le rang de l'échantillon correspondant à l'instant où ce maximum est atteint. Pour affiner l'estimation de cet instant, on peut calculer les valeurs de métrique $T[n_{max}]$, $T[n_{max} - 1]$, $T[n_{max} + 1]$ et effectuer l'interpolation parabolique décrite plus haut. L'instant $(n_{max} + \delta)$ $T$ donne alors précisément l'instant correspondant au premier échantillon du paquet. On comprendra que l'on détermine alors conjointement le début du paquet et l'instant d'échantillonnage.

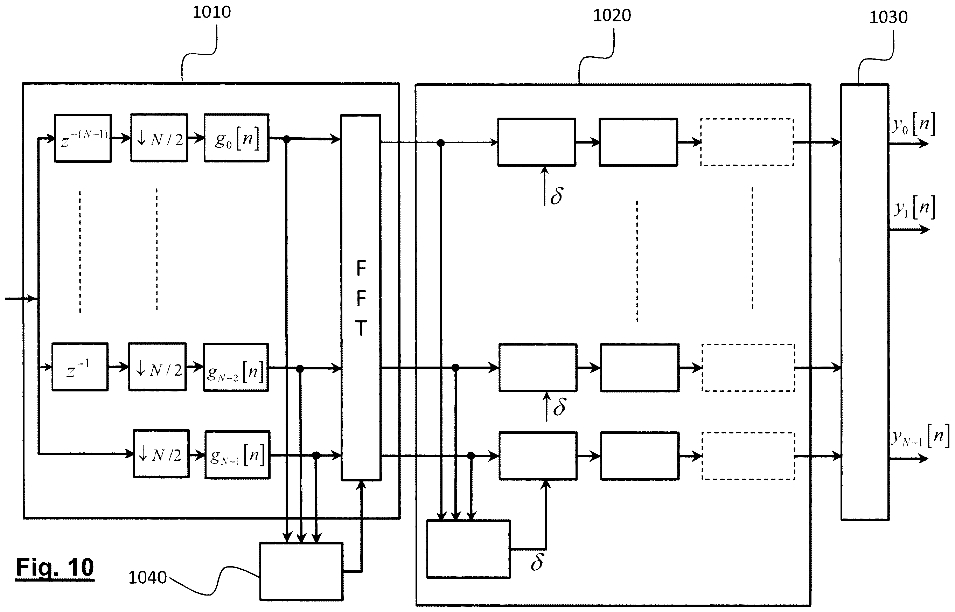

La Fig. 10 représente schématiquement un récepteur FBMC utilisant une méthode de synchronisation dans les domaines temporel et fréquentiel, selon un second mode de réalisation de l'invention.

Comme dans le premier mode de réalisation, le récepteur comprend un banc de filtres d'analyse 1010, un premier module de synchronisation 1020 opérant dans le domaine fréquentiel et un module de post-traitement OQAM, 1030. Les modules 1010, 1020 et 1030 sont respectivement identiques aux modules 610, 620 et 630 de la Fig. 6.

A la différence du premier mode de réalisation, le récepteur FBMC de la Fig. 10 comprend un second module de synchronisation 1040 opérant dans le domaine temporel, autrement dit avant la FFT.

Ce mode de réalisation suppose qu'une séquence de synchronisation soit présente dans le préambule. Du côté émetteur, cette séquence de synchronisation est incorporée dans le préambule en aval du module IFFT, sur au moins une sous-porteuse.

Du côté du récepteur, le second module de synchronisation effectue une corrélation entre les sorties des filtres d'analyse et la séquence de synchronisation. Le pic de corrélation permet de déterminer le début de la FFT. Toutefois, ce pic étant généralement peu prononcé et bruité, il n'est pas possible d'obtenir précisément l'instant d'échantillonnage.

Avantageusement, le second module de synchronisation effectue une synchronisation grossière et le premier module de synchronisation effectue une synchronisation fine au moyen d'une interpolation des échantillons dans le domaine fréquentiel comme décrit dans le cadre du premier mode de réalisation.

## Revendications

1. Récepteur de signal multi-porteuse synthétisé par banc de filtres de synthèse, ledit récepteur comprenant une pluralité de filtres d'analyse pour analyser ledit signal, après échantillonnage en des instants d'échantillonnage, les sorties des filtres étant reliées à un module de transformée de Fourier fournissant, pour une pluralité de sous-porteuses, des échantillons dans le domaine fréquentiel, **caractérisé en ce qu'**il comprend en outre :

   - un module d'estimation d'erreur sur les instants d'échantillonnage (621), recevant lesdits échantillons pour au moins un sous-ensemble de ladite pluralité de sous-porteuses et pour une pluralité desdits instants d'échantillonnage, et fournissant une estimation de ladite erreur ;

   et, pour chaque sous-porteuse de ladite pluralité de sous porteuses :

   - un filtre interpolateur (622), recevant l'estimation de ladite erreur et interpolant des échantillons d'une sous-porteuse pour fournir un échantillon interpolé en un instant d'échantillonnage corrigé de ladite erreur.

2. Récepteur selon la revendication 1, **caractérisé en ce que** le module d'estimation d'erreur sur les instants d'échantillonnage effectue pour chaque sous-porteuse du dit sous-ensemble de sous-porteuses une estimation de la réponse impulsionnelle à la fréquence de cette sous-porteuse d'un ensemble banc de filtres de synthèse, canal de transmission, banc de filtres d'analyse à partir de symboles pilotes, et calcule une métrique à partir des réponses impulsionnelles ainsi estimées.

3. Récepteur selon la revendication 2, **caractérisé en ce que** la métrique est une somme quadratique desdites réponses impulsionnelles pour les sous-porteuses dudit sous-ensemble, ladite métrique étant calculée en trois instants d'échantillonnage consécutifs pour donner trois valeurs de métrique, le module d'estimation d'erreur déterminant l'instant auquel une fonction parabolique, passant par les trois valeurs de métriques en ces trois instants, atteint son maximum et en déduisant l'erreur sur les instants d'échantillonnage.

4. Récepteur selon la revendication 2, **caractérisé en ce que** la métrique est une corrélation desdites réponses impulsionnelles pour les sous-porteuses dudit sous-ensemble, le module d'estimation d'erreur déterminant l'erreur sur les instants d'échantillonnage à partir de la phase du résultat de corrélation.

5. Récepteur selon les revendications 3 et 4, **caractérisé en ce que** le sous-ensemble des sous-porteuses est constitué des sous-porteuses dont un module de la réponse impulsionnelle est supérieur à un seuil prédéterminé.

6. Récepteur selon l'une des revendications précédentes, **caractérisé en ce que** le filtre interpolateur utilise une fonction d'interpolation de type spline, ladite fonction étant identique pour la pluralité des sous-porteuses.

7. Récepteur selon l'une des revendications 1 à 5, **caractérisé en ce que** le filtre interpolateur utilise un polynôme d'interpolation de Lagrange, les coefficients dudit polynôme étant identiques pour la pluralité des sous-porteuses.

8. Récepteur selon l'une des revendications 1 à 7, **caractérisé en ce que** le récepteur comprend en outre un module de post-traitement OQAM (630), un symbole OQAM étant représenté par deux échantillons consécutifs d'une même sous-porteuse, le filtre interpolateur comprenant un premier module interpolant les parties réelles d'une pluralité d'échantillons successifs et un second module interpolant les parties imaginaires de ladite pluralité d'échantillons successifs.

9. Récepteur selon l'une des revendications précédentes, **caractérisé en ce que**, pour chaque sous-porteuse, le filtre interpolateur est suivi d'un module de déphasage (626) effectuant une compensation de phase des échantillons interpolés au moyen d'une multiplication par un terme de phase $\exp(-j\phi(k))$ où $\phi(k)$ est proportionnelle à la fréquence de la sous-porteuse ($k$) et à l'erreur sur les instants d'échantillonnage.

**10.** Récepteur selon la revendication 9, **caractérisé en ce que**, pour chaque sous-porteuse, le module de déphasage (626) est suivi par un égaliseur (627) dans le domaine fréquentiel.

**11.** Récepteur selon l'une des revendications précédentes, **caractérisé en ce que** ledit signal est constitué de trames, chaque trame comprenant un préambule suivi d'un paquet de données utiles, le préambule comprenant une pluralité de symboles pilotes sur des sous-porteuses, dites sous-porteuses actives, de ladite pluralité de sous-porteuses, chaque symbole pilote étant entouré d'un anneau de garde en temps et en fréquence, le récepteur déterminant l'énergie reçue sur lesdites sous-porteuses actives et ouvrant une fenêtre temporelle lorsque cette énergie franchit un seuil prédéterminé, le récepteur déterminant ensuite le début dudit paquet lorsque l'énergie du signal reçu atteint un maximum.

**12.** Récepteur selon l'une des revendications précédentes, **caractérisé en ce que** ledit signal est constitué de trames, chaque trame comprenant un préambule suivi d'un paquet de données utiles, le préambule comprenant pour au moins une porteuse, une séquence de synchronisation, le récepteur comprenant un module de synchronisation dans le domaine temporel (640), ce module recevant les échantillons en entrée du module de transformée de Fourier et effectuant une corrélation avec ladite séquence de synchronisation pour obtenir un pic de corrélation, et effectuant une synchronisation du début de la transformée de Fourier à partir de la position du pic de corrélation ainsi obtenu.

**Patentansprüche**

**1.** Empfänger für ein Multiträgersignal, das durch eine Synthesefilterbank synthetisiert ist, wobei der Empfänger eine Mehrzahl von Analysefiltern zum Analysieren des Signals nach einer Abtastung an Abtastzeitpunkten umfasst, wobei die Ausgänge der Filter mit einem Fouriertransformationsmodul verbunden sind, das für eine Mehrzahl von Unterträgern Abtastwerte in der Frequenzdomäne liefert, **dadurch gekennzeichnet, dass** er ferner umfasst:

- ein Modul zur Fehlerabschätzung an den Abtastzeitpunkten (621), das die Abtastwerte für wenigstens eine Untergesamtheit der Mehrzahl von Unterträgern und für eine Mehrzahl der Abtastzeitpunkte empfängt und eine Abschätzung ihres Fehlers liefert;

und für jeden Unterträger der Mehrzahl von Unterträgern:

- ein Interpolationsfilter (622), das die Abschätzung des Fehlers empfängt und Abtastwerte eines Unterträgers interpoliert, um einen interpolierten Abtastwert an einem Abtastzeitpunkt, korrigiert um den Fehler, zu liefern.

**2.** Empfänger nach Anspruch 1 **dadurch gekennzeichnet, dass** das Modul zur Fehlerabschätzung an den Abtastzeitpunkten für jeden Unterträger der Untergesamtheit von Unterträgern eine Abschätzung der Impulsantwort bei der Frequenz dieses Unterträgers einer Gesamtheit von Synthesefilterbank, Übertragungskanal, Analysefilterbank ausgehend von Steuersymbolen durchführt und eine Metrik berechnet ausgehend von den derart geschätzten Impulsantworten.

**3.** Empfänger nach Anspruch 2, **dadurch gekennzeichnet, dass** die Metrik eine quadratische Summe der Impulsantworten für die Unterträger der Untergesamtheit ist, wobei die Metrik an 3 aufeinanderfolgenden Abtastzeitpunkten berechnet wird, um 3 Metrikwerte zu liefern, wobei das Fehlerabschätzmodul den Zeitpunkt bestimmt, an dem eine parabolische Funktion, die durch die 3 Metrikwerte an diesen 3 Zeitpunkten verläuft, ihr Maximum erreicht, und hieraus den Fehler an den Abtastzeitpunkten herleitet.

**4.** Empfänger nach Anspruch 2, **dadurch gekennzeichnet, dass** die Metrik eine Korrelation der Impulsantworten für die Unterträger der Untergesamtheit ist, wobei das Fehlerabschätzmodul den Fehler an den Abtastzeitpunkten ausgehend von der Phase des Korrelationsergebnisses bestimmt.

**5.** Empfänger nach den Ansprüchen 3 und 4, **dadurch gekennzeichnet, dass** die Untergesamtheit der Unterträger durch Unterträger gebildet ist, bei denen ein Betrag der Impulsantwort größer als eine vorbestimmte Schwelle ist.

**6.** Empfänger nach einem der vorhergehenden Ansprüche, **dadurch gekennzeichnet, dass** das Interpolationsfilter eine Interpolationsfunktion vom Spline-Typ verwendet, wobei die Funktion für die Mehrzahl der Unterträger identisch ist.

7. Empfänger nach einem der Ansprüche 1 bis 5, **dadurch gekennzeichnet, dass** das Interpolationsfilter ein Lagrange-Interpolationspolynom verwendet, wobei die Koeffizienten des Polynoms für die Mehrzahl der Unterträger identisch sind.

8. Empfänger nach einem der Ansprüche 1 bis 7, **dadurch gekennzeichnet, dass** der Empfänger ferner ein OQAM-Nachbearbeitungsmodul (630) umfasst, wobei ein OQAM-Symbol durch 2 aufeinanderfolgende Abtastwerte ein- und desselben Unterträgers repräsentiert ist, wobei das Interpolationsfilter ein erstes Modul umfasst, das die Realteile einer Mehrzahl von aufeinanderfolgenden Abtastwerten interpoliert, sowie ein zweites Modul, das die Imaginärteile der Mehrzahl von aufeinanderfolgenden Abtastwerten interpoliert.

9. Empfänger nach einem der vorhergehenden Ansprüche, **dadurch gekennzeichnet, dass** für jeden Unterträger auf das Interpolationsfilter ein Phasenverschiebungsmodul (626) folgt, das eine Phasenkompensation der interpolierten Abtastwerte durchführt mit Hilfe einer Multiplikation mit einem Phasenterm exp $(-j\Phi(k))$ wobei $\Phi(k)$ proportional ist zur Frequenz des Unterträgers (k) und zum Fehler an den Abtastzeitpunkten.

10. Empfänger nach Anspruch 9, **dadurch gekennzeichnet, dass** für jeden Unterträger auf das Phasenverschiebungsmodul (626) ein Entzerrer (627) in der Frequenzdomäne folgt.

11. Empfänger nach einem der vorhergehenden Ansprüche, **dadurch gekennzeichnet, dass** das Signal durch Frames gebildet ist, wobei jedes Frame eine Präambel umfasst, auf die ein Paket von Nutzdaten folgt, wobei die Präambel eine Mehrzahl von Steuersymbolen auf den Unterträgern umfasst, genannt aktive Unterträger aus der Mehrzahl von Unterträgern, wobei jedes Steuersymbol umgeben ist von einem Zeit- und Frequenzschutzring, wobei der Empfänger die Energie bestimmt, die auf den aktiven Unterträgern empfangen wird, und ein Zeitfenster öffnet, wenn diese Energie eine vorbestimmte Schwelle übersteigt, wobei der Empfänger dann den Beginn des Pakets bestimmt, wenn die Energie des empfangenen Signals ein Maximum erreicht.

12. Empfänger nach einem der vorhergehenden Ansprüchen, **dadurch gekennzeichnet, dass** das Signal durch Frames gebildet ist, wobei jedes Frame eine Präambel umfasst, auf die ein Paket von Nutzdaten folgt, wobei die Präambel für wenigstens einen Träger eine Synchronisationssequenz umfasst, wobei der Empfänger ein Modul zur Synchronisation in der Zeitdomäne (640) umfasst, wobei dieses Modul die Abtastwerte am Eingang des Fouriertransformationsmoduls empfängt und eine Korrelation mit der Synchronisationssequenz durchführt, um einen Korrelationspeak zu erhalten, und eine Synchronisation des Beginns der Fouriertransformation ausgehend von der Position des derart erhaltenen Korrelationspeaks durchführt.

**Claims**

1. A multi-carrier signal receiver synthesized by a synthesis filter bank, said receiver comprising a plurality of analysis filters for analysing said signal, after sampling, at sampling instants, the outputs of the filters being connected to a Fourier transform module providing, for a plurality of subcarriers, samples in the frequency domain, **characterised in that** it further comprises:

   - an error estimation module on the sampling instants (621), receiving said samples for at least one subset of said plurality of subcarriers and for a plurality of said sampling instants, and providing an estimation of said error;

   and, for each subcarrier of said plurality of subcarriers:

   - an interpolating filter (622), receiving the estimation of said error and interpolating samples of a subcarrier to provide an interpolated sample at an error-corrected sampling instant.

2. The receiver according to claim 1, **characterised in that** the error estimation module on the sampling instants makes for each subcarrier of said subset of subcarriers an estimation of the impulse response at the frequency of this subcarrier of a set constituted by the synthesis filter bank, the transmission channel, and the analysis filter bank from pilot symbols, and calculates a metric from the impulse responses thus estimated.

3. The receiver according to claim 2, **characterised in that** the metric is a quadratic sum of said impulse responses for the subcarriers of said subset, said metric being calculated at three consecutive sampling instants to give three metric values, the error estimation module determining the instant at which a parabolic function, passing through the three metric values at these three instants, reaches its maximum and by deducing therefrom the error on the sampling instants.

4. The receiver according to claim 2, **characterised in that** the metric is a correlation of said impulse responses for the subcarriers of said subset, the error estimation module determining the error on the sampling instants from the phase of the correlation result.

5. The receiver according to claims 3 and 4, **characterised in that** the subset of the subcarriers consists of subcarriers a module of the impulse response of which is higher than a predetermined threshold.

6. The receiver according to one of the preceding claims, **characterised in that** the interpolating filter uses a spline-type interpolation function, said function being identical for the plurality of subcarriers.

7. The receiver according to one of claims 1 to 5, **characterised in that** the interpolating filter uses a Lagrange interpolation polynomial, the coefficients of said polynomial being identical for the plurality of subcarriers.

8. The receiver according to one of claims 1 to 7, **characterised in that** the receiver further comprises an OQAM post-processing module (630), an OQAM symbol being represented by two consecutive samples of a same subcarrier, the interpolating filter comprising a first module interpolating the real parts of a plurality of successive samples and a second module interpolating the imaginary parts of said plurality of successive samples.

9. The receiver according to one of the preceding claims, **characterised in that**, for each subcarrier, the interpolating filter is followed by a phase-shift module (626) making a phase compensation of the samples interpolated by means of a multiplication by a phase term $\exp(-j\phi(k))$ where $\phi(k)$ is proportional to the frequency of the subcarrier ($k$) and to the error on the sampling instants.

10. The receiver according to claim 9, **characterised in that**, for each subcarrier, the phase-shift module (626) is followed by an equalizer (627) in the frequency domain.

11. The receiver according to one of the preceding claims, **characterised in that** said signal consists of frames, each frame comprising a preamble followed by a useful data packet, the preamble comprising a plurality of pilot symbols on subcarriers, called active subcarriers, of said plurality of subcarriers, each pilot symbol being surrounded by a time and frequency guard ring, the receiver determining the energy received on said active subcarriers and opening a time window when this energy crosses a predetermined threshold, the receiver then determining the beginning of said packet when the energy of the received signal reaches a maximum.

12. The receiver according to one of the preceding claims, **characterised in that** said signal consists of frames, each frame comprising a preamble followed by a useful data packet, the preamble comprising for at least one carrier, a synchronization sequence, the receiver comprising a synchronization module in the time domain (640), this module receiving the samples at the input of the Fourier transform module and making a correlation with said synchronization sequence to obtain a correlation peak, and making a synchronization of the beginning of the Fourier transform from the position of the correlation peak thus obtained.

**Fig. 1**

$x_k[n]$ — $\Re$ — $\uparrow 2$ — $\oplus$ — $\otimes$ — $\theta_k^n$ — 240

230  220

$\Im$ — $\uparrow 2$ — $z^{-1}$

$k$ pair

$x_k[n]$ — $\Re$ — $\uparrow 2$ — $\oplus$ — $\otimes$ — $\theta_k^n$ — 240

230  220

$\Im$ — $\uparrow 2$ — $z^{-1}$

$k$ impair

**Fig. 2A**

**Fig. 2B**

**Fig. 3**

**Fig. 4**

EP 2 974 194 B1

510    520    530

**Fig. 5**

$T[n]$

$T[n-1]$

$T[n+1]$

**Fig. 8**

$t_{n-1}$    $t_n$    $t_{n+1}$

$t_n + \delta$

**Fig. 6**

EP 2 974 194 B1

**Fig. 7A**

**Fig. 7B**

**Fig. 9**

**Fig. 10**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **B. HIROSAKI.** An orthogonally multiplexed QAM system using the discrete Fourier transform. *IEEE Trans on Comm.,* Juillet 1981, vol. 29 (7), 982-989
- **P. SIOHAN et al.** Analysis and design of OFDM/OQAM systems based on filterbank theory. *IEEE Trans. on signal processing,* Mai 2002, vol. 50 (5), 1170-1183

- **CARLOS ARLOS AURELIO FARIA DA ROCHA et al.** Sub-channel equalizer design based on geometric interpolation for FBMC/OQAM systems. *CIRCUITS AND SYSTEMS (ISCAS), 2011 IEEE INTERNATIONAL SYMPOSIUM,* 15 Mai 2011, 1279-1282
- **T.H. STITZ et al.** Practical issues in frequency domain synchronization for filter bank based multicarrier transmission. *Proc. of. ISCCSP, 2008,* 12 Mars 2008, 411-416